Europäisches Patentamt

European Patent Office

Office européen des brevets

(11) Veröffentlichungsnummer: **0 444 193 A1**

## (12) EUROPÄISCHE PATENTANMELDUNG
### veröffentlicht nach Art. 158 Abs. 3 EPÜ

(21) Anmeldenummer: 88908414.1

(22) Anmeldetag: 20.05.88

(86) Internationale Anmeldenummer:
PCT/SU88/00108

(87) Internationale Veröffentlichungsnummer:
WO 89/11328 (30.11.89 89/28)

(51) Int. Cl.5: **B01D 53/22**

(43) Veröffentlichungstag der Anmeldung:
04.09.91 Patentblatt 91/36

(84) Benannte Vertragsstaaten:
AT BE CH DE FR GB IT LI LU NL SE

(71) Anmelder: VSESOJUZNY
NAUCHNO-ISSLEDOVATELSKY INSTITUT
METALLURGICHESKOI TEPLOTEKHNIKI
ul. Studencheskaya 16
Sverdlovsk, 620219(SU)

(72) Erfinder: BABOSHIN, Vasily Mikhailovich
ul. Tekhnologicheskaya, 8-9
Sverdlovsk, 620049(SU)
Erfinder: BUEVICH, Jury Alexandrovich
ul. Uralskaya, 74-217
Sverdlovsk, 620067(SU)
Erfinder: IVONIN, Anatoly Konstantinovich
ul. Vostochnaya, 40-36
Sverdlovsk, 620075(SU)
Erfinder: KIRNOS, Igor Vasilievich
bulvar Kultury, 25-238
Sverdlovsk, 620058(SU)
Erfinder: KULIKOV, Gennady Georgievich
ul. Uralskaya, 54-46
Sverdlovsk, 620067(SU)
Erfinder: MAKEDONSKY, Viktor Mikhailovich
ul. Uritskogo, 32-96
Kiev, 252035(SU)
Erfinder: POGREBISKY, David Moiseevich
ul. Zatonskogo, 13a-54
Kiev, 252061(SU)
Erfinder: POPOVTSEV, Jury Alexandrovich
ul. Pugacheva, 44-29 Sverdlovskaya obl.
Kamensk-Uralsky, 623418(SU)
Erfinder: ROMASHEVSKY, Vladimir Borisovich
ul. Profsojuznaya, 83-156
Sverdlovsk, 620010(SU)
Erfinder: SKOBLIK, Igor Isidorovich
ul. Severnaya, 16-36 Moskovskaya obl.
Odintsovo-9, 143000(SU)
Erfinder: TIMOFEEV, Nikolai Ivanovich
ul. Voevodina, 4-146
Sverdlovsk, 620014(SU)
Erfinder: FILIPPOV, Vladimir Ivanovich
ul. Zavodskaya, 32-2-115
Sverdlovsk, 620131(SU)
Erfinder: CHEREPENIN, Evgeny Leonidovich
ul. Komsomolskaya, 2b-9
Sverdlovsk, 620066(SU)
Erfinder: MINAKOV, Alexandr Sergeevich
ul. Kosmonavtov, 7/2-57
Sverdlovsk, 398043(SU)
Erfinder: OZHIGANOV, Vladimir Sergeevich
ul. 8 Marta, 7-15
Sverdlovsk, 620014(SU)
Erfinder: AVDEEV, Viktor Alexeevich
Oktyabrskaya pl., 1-57
Moscow, 117049(SU)
Erfinder: BOLTAI, Leonid Pavlovich
ul. Volzhskaya, 14-9
Krasnoyarsk, 660013(SU)
Erfinder: GELD, Pavel Vladimirovich
ul. Mira, 36-78
Sverdlovsk, 620078(SU)
Erfinder: DUDKO, Daniil Andreevich
ul. Anri Barbjusa, 22/26-113
Kiev, 252005(SU)

(74) Vertreter: Finck, Dieter et al
Patentanwälte v. Füner, Ebbinghaus, Finck
Mariahilfplatz 2 & 3
W-8000 München 90(DE)

EP 0 444 193 A1

(54) **MEMBRANELEMENT UND VORRICHTUNG ZUM EXTRAHIEREN VON HOCHREINEM WASSERSTOFF AUS GASFÖRMIGEN, WASSERSTOFF ENTHALTENDEN MISCHUNGEN.**

(57) Das Membranelement (1) zur Gewinnung hochreinen Wasserstoffs enthält wasserstoffdurchlässige Membranen (2) aus einer Legierung auf der Palladiumgrundlage, ein Ableitungsrohr (4) für die Ableitung des Wasserstoffs und eine Drenageunterlage 1a). Ein Teil des Ableitungsrohrs (4) liegt zwischen den Membranen (2) in der Nähe eines ihrer Ränder (3) im wesentlichen über die gesamte Länge der Drenageunterlage (1a) und wird von außen von dieser Unterlage (1a) unter Bildung eines verdickten Abschnitts (6) in einiger Entfernung vom Rohr (4) umfaßt.

Der Membranapparat enthält ein Gehäuse (9) mit einem Rohrgitter (14) und eine unter ihm aufgestellte Büchse (15) mit gelochten Wänden (16). In der Büchse (15) befinden sich ein durch ihren Boden hindurchgehender Kollektor (20) für das Abgasgemisch und die erwähnten Membranelements (1), von denen jedes mit seinem vom Ableitungsrohr (4) entfernten Rand (21) ins Innere der Büchse (15) gerichtet ist.

Gebiet der Technik

Die vorliegende Erfindung betrifft ein Membranelement und einen Membranapparat zur Gewinnung hochreinen Wasserstoffs aus wasserstoffhaltigen Gasgemischen durch selektive Diffusion des Wasserstoffs durch Metallmembranen (Palladiummembranen).

Zugrundeliegender Stand der Technik

Es ist ein Apparat zur Gewinnung hochreinen Wasserstoffs bekannt (US,A, 3779711), der als Rohrkonstruktion ausgeführt ist und in dem als Membranelemente nahtlose kapillarrohre aus einer Legierung auf der Palladiumgrundlage verwendet werden.

Der Apparat enthält ein Gehäuse mit einem Stutzen für die Zuleitung eines wasserstoffhaltigen Gemisches und mit Stutzen für die Ableitung des hochreinen Wasserstoffs und der Ballastabgase. Der Innenraum des Apparats ist in eine Hoch- und eine Niederdruckkammer mit Hilfe eines Rohrgitters unterteilt, an dem mit ihren Enden die nahtlosen Kapillarrohre befestigt sind, die zu Bündeln gefaßt und in der Hochdruckkammer untergebracht sind.

Die in die Hochdruckkammer (ca. 10 bis 15 MPa) geleiteten Komponenten des wasserstoffhaltigen Gemisches werden an der Außenfläche jedes Membranelements (Rohrs) adsorbiert, wobei auf der Palladiumlegierung nur die Wasserstoffmoleküle in Atome aufspalten und dabei ein Elektron verlieren, sich in der festen Matrize lösen und unter Einwirkung eines Konzentrationsgefälles von der Außenfläche des Rohrs zur Innenfläche hin diffundieren, wo die Assoziations- und Desorptionsprozesse ablaufen.

Der auf diese gewonnene hochreine Wasserstoff wird durch die Rohre in die Niederdruckkammer geleitet und dann dem Verbraucher zugeführt.

Auf Grund der dichten Verpackung der Rohre im Bündel ist es in diesem Apparat schwer, ein undicht gewordenes Röhrchen auszuwechseln. Darum muß das ausgefallene Röhrchen entweder zugeschweißt werden oder man muß das ganze Bündel auswechseln, wodurch entsprechend die Leistung des gesamten Apparats erheblich sinkt. Derartige Membranelemente fallen gewöhnlich nach 2 bis 3 Wärmezyklen aus. Die Stellen, an denen die dünnwandigen Röhrchen an den Stahlelementen des Rohrgitters befestigt sind, sind während des Betriebs (hoher Druck und hohe Temperatur) aufgrund wesentlicher Unterschiede der mechanischen Eigenschaften dieser Stoffe bei wechselnden Temperaturen erheblichen Spannungen ausgesetzt, wodurch diese Befestigungsstellen undicht werden. Zur Erhöhung der Lebensdauer dieses Apparats muß die Betriebstemperatur bis auf 350 bis 400 °C begrenzt werden, was ebenfalls seine Leistung beeinträchtigt. Die verwendeten dünnwandigen Palladiumröhrchen haben einen kleinen Durchmesser. Zur Ausrüstung eines leistungsstarken Apparats wird deshalb eine große Anzahl dieser Röhrchen benötigt.

Es ist auch ein Membranapparat zum Entsalzen von Seewasser bekannt, in dem das Osmoseprinzip zur Anwendung kommt (US, A, 3367504).

Der Apparat enthält eine zylindrische Kammer mit einem koaxial in ihr aufgestellten hohlen Kollektor, auf den spiralartig eine Hülle aufgewickelt ist, die aus halbdurchlässigen Membranplatten besteht, die durch eine Drenageunterlage voneinander getrennt sind. Die Hülle ist auf der gesamten Breite mit porösen Röhrchen versehen, die mit einer Einrichtung zum Zuleiten des zu reinigenden Wassers verbunden sind. Die Funktion des Kollektors zusammen mit der Hülle beruht auf dem Prinzip eines Membranelements.

Das zu reinigende Wasser (z. B. Seewasser) gelangt durch die erwähnten Röhrchen in den Raum der Hülle und wird beim Durchfließen durch die Membran vom Salz befreit. Das gereinigte Wasser kommt in den Kollektor und wird dann dem Verbraucher zugeleitet.

Das Membranelement ist wenig effektiv bei hohem Druck und hoher Temperatur, die notwendig zur Gewinnung hochreinen Wasserstoffs sind, weil erstens die Verbindungsnähte zwischen verschiedenartigen Stoffen auf großer Länge in kurzer Zeit undicht werden. Zweitens besitzt diese Konstruktion einen hohen hydraulischen Widerstand und funktioniert nach einem uneffektiven Gleichstromprinzip des Massenaustausches, weshalb keine leistungsstarken und betriebszuverlässigen Apparate geschaffen werden können.

Es ist ein Membranelement bekannt (GB, A, 1140952), das von beiden Seiten auf eine Nickelplatte gelegte wasserstoffdurchlässige Membranen aus einer Legierung auf der Palladiumgrundlage die an den Rändern verschweißt sind, und ein Rohr zum Ableiten des hochreinen Wasserstoffs enthält, das mit dem Raum zwischen den Membranen in Verbindung steht. Die Membranen haben eine wellige Oberfläche. Die Membranelemente haben einen hohen hydraulischen Widerstand. Mit ihrer Hilfe kath man in Apparaten zur Gewinnung hochreinen Wasserstoffs keine hohe Leistung erzielen.

Offenbarung der Erfindung

Der Erfindung liegt die Aufgabe zugrunde, ein Membranelement zur Gewinnung hochreinen Wasserstoffs mit solch einer Anordnung des Rohrs zum Ableiten des hochreinen Wasserstoffs und der Unterlage, das einen geringen hydraulischen Widerstand hat, der eine höchstmögliche Effektivität bei der Gewinnung des Wasserstoffs unter Betriebsbedingungen gewährleistet, und einen Membranapparat zur Gewinnung hochreinen Wasserstoffs aus wasserstoffhaltigen Gasgemischen unter Verwendung der genannten Membranelemente bei solch einer gegenseitigen Anordnung dieser Elemente zu schaffen, bei der der Massenaustausch in Gegenstromprinzip realisiert werden kann, das erheblich die Leistung des Apparats im ganzen erhöht.

Diese Aufgabe wird dadurch gelöst, daß ein Membranelement zur Gewinnung hochreinen Wasserstoffs angeboten wird, das von beiden Seiten auf eine Drenageunterlage gelegte, an den Rändern miteinander verbundene, wasserstoffdurchlässige Membranen aus einer Legierung auf der Palladiumgrundlage und ein Ableitungsrohr zur Ableitung des Wasserstoffs enthält, das mit dem Raum zwischen den Membranen in Verbindung steht, in dem gemäß der Erfindung ein Teil des Ableitungsrohrs gelocht ist, zwischen den Membranen in der Nähe eines ihrer Ränder im wesentlichen über die gesamte Länge der Drenageunterlage verläuft und von außen von dieser Unterlage unter Bildung eines verdickten Abschnitts in einiger Entfernung vom Rohr umfaßt wird.

Solch eine konstruktive Ausführung des Membranelements ermöglicht erstens die Ableitung des Wasserstoffs von der Innenfläche der Membran zum Ableitungsrohr auf dem kürzesten Weg auch vom entferntesten Ende des Elements. Zweitens ist die Querschnittsfläche des Elements (des Ableitungskanals) auf dem verdickten Abschnitt der Unterlage um das Zweifache größer, wodurch die Strömungsgeschwindigkeit des gewonnenen Wasserstoffs auf dem an das Ableitungsrohr anschließenden Abschnitt gesenkt werden kann. Diese beiden Faktoren verringern den hydraulischen Widerstand des Membranelements, was eine höchstmögliche Effektivität der Gewinnung von Wasserstoff gewährleistet und die spezifische Leistung des Elements erhöht.

Es ist zweckmäßig, das Ende des Ableitungsrohrs auf dem gelochten Abschnitt abgeflacht auszuführen zum Schutz der Membran vor Beschädigungen beim Betrieb des Membranelements unter den Bedingungen hoher Drücke und schwankender Temperaturen. Es ist erwünscht, daß das abgeflachte Ende eine Schutzhülle zum Schutz der Membran vor Beschädigungen bei schnell aufeinanderfolgenden Wärmezyklen hat.

Es wird ebenfalls ein Membranapparat zur Gewinnung hochreinen Wasserstoffs aus wasserstoffhaltigen Gasgemischen angeboten, der ein Gehäuse mit Stutzen für die Zuleitung des wasserstoffhaltigen Gasgemisches und die Ableitung des hochreinen Wasserstoffs enthält, in dessen Innern ein Rohrgitter und unter ihm die Membranelemente aufgestellt sind, in denen jeweils das Ableitungsrohr entlang der Längsachse des Gehäuses gerichtet und im Rohrgitter mit dem freien Ende befestigt ist, das mit den Stutzen für die Ableitung des Wasserstoffs verbunden ist, in dem gemäß der Erfindung im Innern des Gehäuses unter dem Rohrgitter eine Büchse mit gelochten Wänden aufgestellt ist, die zusammen mit den Wänden des Gehäuses einen ringförmigen Kanal für das Durchfließen des Gasgemisches bilden, und in der Büchse ein durch ihren Boden hindurchgehender Kollektor für das Abgasgemisch und die erwähnten Membranelemente untergebracht sind, von denen jedes Element mit seinem vom Ableitungsrohr entfernten Rand ins Innere der Büchse gerichtet ist.

Solch eine konstruktive Ausführung des Apparats ermöglicht die Realisierung des Gegenstromprinzips beim Massenaustausch, das in Abhängigkeit von der Anzahl der Membranelemente und den Betriebsverhältnissen zu einer Erhöhung der Leistung des erfindungsgemäßen Apparats in bezug auf Wasserstoff bis auf 1000 m³/h führt.

In Abhängigkeit von der geforderten Leistung des Apparats und der Konzentration des Wasserstoffs in dem zu verarbeitenden Ausgangsgasgemisch ist es erwünscht, daß die Membranelemente in der Büchse so aufgestellt werden, daß die Ableitungsrohre auf einer Kreislinie wenigstens in einer Reihe angeordnet werden und die von den Ableitungsrohren entfernten Ränder zu dem auf der Längsachse des Gehäuses aufgestellten Kollektor hin gerichtet sind. Zum gleichen Zweck ist es erwünscht, daß die Membranelemente einer Reihe schachbrettartig zu den Membranelementen der anderen Reihe angeordnet werden oder daß die Membranelemente in mehreren Reihen angeordnet werden, wobei in der zum Kollektor nächstgelegenen Reihe die vom Ableitungsrohr entfernten Ränder der Membranelemente zweckmäßig zu dem auf der Längsachse des Gehäuses aufgestellten Kollektor gerichtet werden, während die Ränder der Membranelemente jeder nächsten Reihe zu den Rohren der benachbarten Elemente der vorhergehenden Reihe so gerichtet sind, daß die Membranelemente spiralförmige Kanäle bilden.

Bei solch einer Anordnung der Membranelemente bestehen optimale Verhältnisse des Massenaustausches im Arbeitsraum des erfindungsgemäßen Membranapparats.

Kurze Beschreibung der Zeichnungen

Im folgenden wird die Erfindung durch eine ausführliche Beschreibung eines Membranelemente und eines Membranapparats zur Gewinnung hochreinen Wasserstoffs aus wasserstoffhaltigen Gasgemischen gemäß der Erfindung mit Hinweisen auf die beiliegenden Zeichnungen erläutert, und zwar zeigt:

Fig. 1 schematisch ein erfindungsgemäßes Membranelement, teilweise im Schnitt;

Fig. 2 einen Schnitt gemäß der Linie II-II in Fig. 1 im vergrößerten Maßstab;

Fig. 3 einen Schnitt gemäß der Linie III-III in Fig. 1 im vergrößerten Maßstab;

Fig. 4 isometrisch einen erfindungsgemäßen Membranapparat zur Gewinnung hochreinen Wasserstoffs mit einem Ausschnitt;

Fig. 5 schematisch einen Schnitt gemäß der Linie V-V in Fig. 4;

Fig. 6,7 schematisch andere Varianten der Anordnung der Membranelemente in der Büchse in Schnitten gemäß den Linien VI-VI, VII-VII in Fig. 4.

Beste Ausführungsvariante der Erfindung

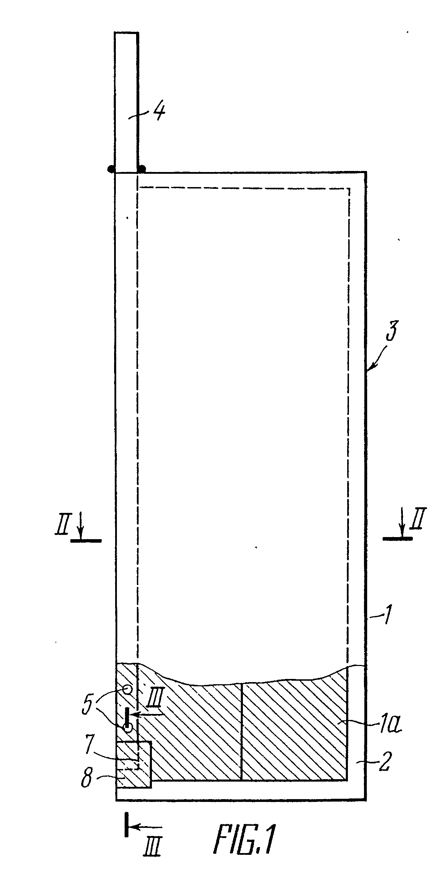

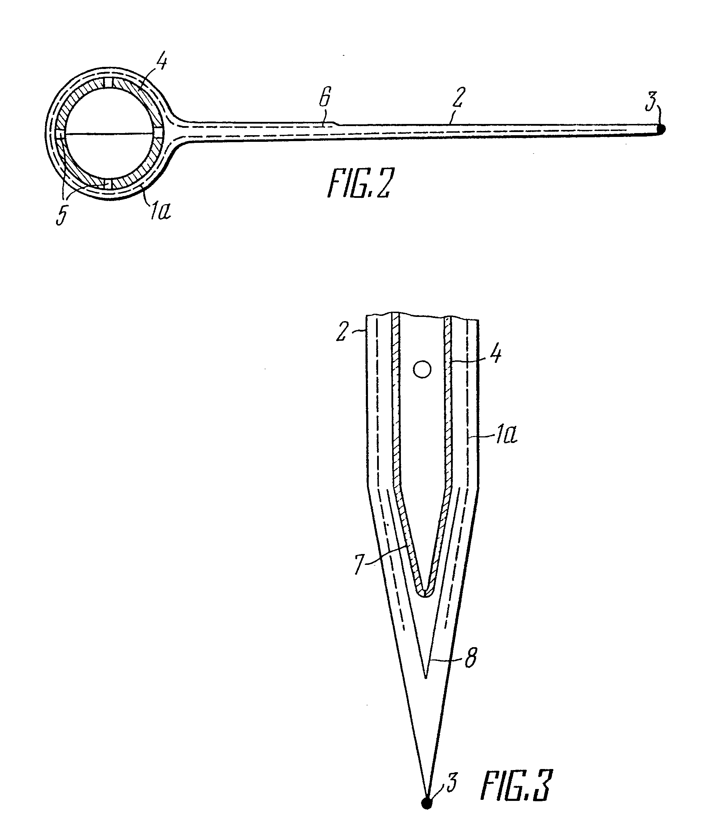

Das erfindungsgemäße Membranelement 1 (Fig. 1) enthält zwei von beiden Seiten auf eine Drenageunterlage la gelegte wasserstoffdurchlässige Membranen 2 aus einer Legierung auf der Palladiumgrundlage, die an den Rändern 3 verschweißt sind, und ein Ableitungsrohr 4 für die Ableitung des Wasserstoffs, das mit den Raum zwischen den Membranen 2 in Verbindung steht. Ein Teil des Ableitungsrohrs 4 ist mit Löchern 5 versehen und liegt zwischen den Membranen 2 in der Nähe einer ihrer Ränder praktisch über die gesamte Länge der Drenageunterlage la. Der gelochte Abschnitt des Ableitungsrohrs 4 wird von außen von der Unterlage la umfaßt mit Bildung eines verdickten Abschnitts 6 (Fig. 2) in einiger Entfernung vom Ableitungsrohr 4.

Am zweckmäßigsten ist solch eine Montage des erfindungsgemäßen Membranelements, bei der das Aufeinanderlegen der Membranen 2 durch Umbiegen einer Membran 2 in der Mitte erfolgt und das von der Unterlage la umfaßte Rohr 4 an der Stelle der Biegung verlegt wird. In diesem Fall werden die Membranen nur an 3 Rändern statt an 4 Rändern verschweißt. Diese Variante ist in Fig. 2 abgebildet.

Solch eine Ausführung und Verlegung des Ableitungsrohrs 4 gewährleistet bei der Ableitung des Wasserstoffs von der Innenfläche der Membran 2 zum Ableitungsrohr 4, das die Funktion eines Kollektors ausübt, den kürzesten Weg, der nicht länger als die Breite des Membranelements ist. In diesem Fall ist der hydraulische Widerstand wesentlich geringer. Auf dem verdickten Abschnitt 6 der Drenageunterlage la ist die Querschnittsfläche des Membranelements um das Zweifache größer, wodurch die Strömungsgeschwindigkeit des Wasserstoffs beim Zugang zum Rohr 4, wo der Strom des Wasserstoffs maximal ist, verringert und folglich der hydraulische Widerstand des Elements im ganzen gesenkt werden kann.

Zum Schutz der Membran 2 vor Beschädigungen bei zyklischem Temperaturverlauf und beim Betrieb bei hohem Druck ist es zweckmäßig, das Ende 7 des Rohrs 4 auf dem gelochten Abschnitt abgeflacht auszuführen und mit einer Schutzhülle 8, wie in Fig. 3 gezeigt ist, zu versehen. Da das Verhältnis des Diffusionswiderstands und des kinetischen Widerstands, das die Intensität der Massenübertragung des Wasserstoffs im Membranelement bestimmt, von der Dicke der Membran 2 abhängt, empfielt es sich, daß die Dicke der Membran 2 0,1 mm oder weniger beträgt. Das Material, aus dem das Rohr 4 und die Schutzhülle 8 bestehen, muß einen Volumenausdehnungskoeffizient haben, der nahe an den entsprechenden Koeffizient des Materials der Membran 2 herankommt. Das gewährleistet die Zuverlässigkeit des gesamten Membranelements.

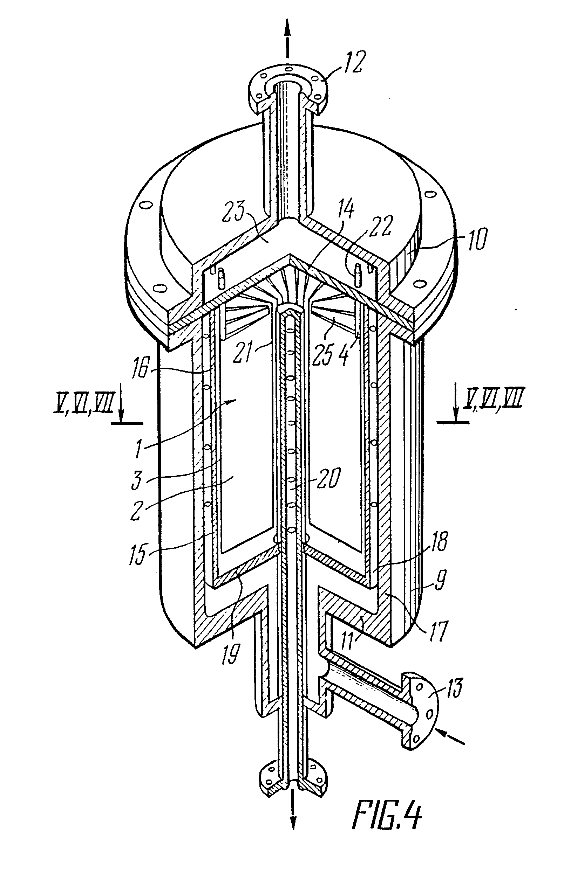

Der Membranapparat zur Gewinnung hochreinen Wasserstoffs aus wasserstoffhaltigen Gemischen enthält gemäß der Erfindung ein zylindrisches Gehäuse 9 (Fig. 4) mit einem Deckel 10 und einem Boden 11. Der Deckel 10 hat einen Stutzen 12 zur Ableitung des hochreinen Wasserstoffs, und im Boden befindet sich ein Stutzen 13 für die Zuleitung des wasserstoffhaltigen Gemisches.

Im Innern des Gehäuses 9 ist ein Rohrgitter 14 aufgestellt, unter dem sich eine Büchse 15 mit gelochten Wänden 16 befindet, die zusammen mit den Wänden 17 des Gehäuses 9 einen ringförmigen Kanal 18 für das Durchfließen des wasserstoffhaltigen Gasgemisches bilden. Im Innern der Büchse 15 ist ein durch ihren Boden 19 hindurchgehender Kollektor 20 installiert, durch den das Abgasgemisch aus der Büchse 15 abgeleitet wird. In der erfindungsgemäßen Variante ist der Kollektor 20 auf der Längsachse des Gehäuses 9 aufgestellt und dient gleichzeitig als Stutzen für die Ableitung des genannten Gemisches, wobei er eine zylindrische Form und gelochte Wände auf der Länge der Büchse 15 hat. In der Büchse 15 befinden sich die erfindungsgemäßen Membranelemente 1, von denen jedes gemäß der Erfindung mit seinem vom Ableitungsrohr 4 entfernten Rand 21 ins Innere der Büchse 15 gerichtet ist. Die Rohre 4 jedes Membranelements 1 verlaufen längs der Längsachse des Gehäuses 9 und sind mit ihren freien Enden 22 mit Hilfe von Reduzierhülsen (in Fig. 4 nicht abgebildet) im Rohrgitter 14 befestigt. Die Enden 22 stehen über eine vom Deckel 10 und vom Rohrgitter 14 gebildete Kammer 23 mit dem Stutzen 12 für die Ableitung des hochreinen Wasserstoffs zum Verbraucher in Verbindung. Die Form des Gehäuses 9 und des Kollektors 20, die Anordnung des letzteren und die Breite des Kanals 18 müssen nur eine einfache Montage und einen optimalen Massenaustausch gewährleisten und stellen keine unbedingt einzuhaltende Bedingung dar. Für kleine Produktionsanlagen und bei geringer Ausbeute des hochreinen Wasserstoffs aus dem Gasgemisch wird ein Apparat angeboten, in dem die Membranelemente 1 in der Büchse 15 so aufgestellt sind, daß die Ableitungsrohre auf einer Kreislinie wenigstens in einer Reihe 24 (Fig. 5) angeordnet sind, wobei die von ihnen entfernten Ränder 21 zum Kollektor 20 hin gerichtet sind, der auf der Längsachse des Gehäuses 9 aufgestellt ist.

Die Außenflächen benachbarter Membranelemente 1 in einer Reihe bilden Zuleitungskanäle 25, die eine Strömung des wasserstoffhaltigen Gemisches in der Büchse 15 entlang der Membranen 2 zum Kollektor 20 hin gewährleisten. Diese Variante ist in Fig. 4 und schematisch in Fig. 5 abgebildet. Für leistungsstarke Apparate mit hoher Ausbeute des hochreinen Wasserstoffs aus Gasgemischen werden andere Varianten der Anordnung der Membranelemente 1 in mehreren Reihen und der Ableitungsrohre 4 auf einer Kreislinie empfohlen.

In Fig. 6 sind die Membranelemente 1 in zwei Reihen 24,26 angeordnet, wobei die Membranelemente 1 einer Reihe 24 schachbrettartig zu den Membranelementen 1 der anderen Reihe 26 liegen. Die von den Ableitungsrohren 4 entfernten Ränder 21 der Elemente 1 sind zu dem auf der Längsachse des Gehäuses 9 aufgestellten Kollektor 20 hin gerichtet.

Die Außenflächen benachbarter Membranelemente 1, die in der Reihe 24 und in der Reihe 26 liegen, bilden einen Zuleitungskanal 27, der die Strömung des wasserstoffhaltigen Gemisches in der Büchse 15 entlang ihrer Membranen 2 (in Fig. 6 nicht abgebildet) zum Kollektor 20 hin ermöglicht.

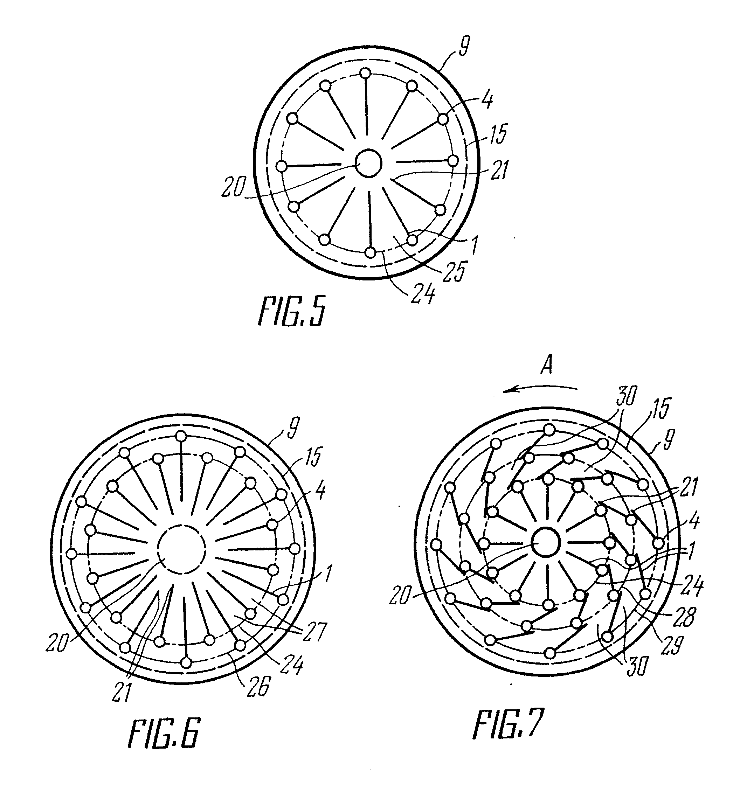

In Fig. 7 wird die Anordnung der Membranelemente 1 in drei Reihen 24,26,29 empfohlen. In der am nächsten zum Kollektor 20 gelegenen Reihe 24 sind die vom Ableitungsrohr 4 entfernten Ränder 21 zum auf der Längsachse des Gehäuses 9 installierten Kollektor 20 hin gerichtet. Die Ränder 21 der Membranelemente 1 jeder nächsten Reihe 28,29 sind zu den Rohren 4 der benachbarten Elemente 1 der vorhergehenden Reihe so gerichtet, daß die Membranelemente 1 spiralförmige Kanäle 30 bilden (in der Zeichnung ist die bedingte Richtung der Kanäle 30 durch den Pfeil A angedeutet).

Der erfindungsgemäße Membranapparat, der die Membranelemente 1 enthält, funktioniert folgendermaßen.

Das bis auf 600 bis 630° C erhitzte wasserstoffhaltige Gasgemisch wird unter einem Druck von 1 bis 1,8 MPa durch den Stutzen 13 in den ringförmigen Kanal 18 gleichmäßig über die Höhe des Apparats geleitet. Weiter strömt das wasserstoffhaltige Gemisch durch die Löcher der gelochten Wände 16 der Büchse 15 und die Zuleitungskanäle 25,27,30 entlang der Membranen 2 der Membranelemente 1 von seiten ihrer Rohre 4 zum Kollektor 20. Da die aus Palladiumlegierungen bestehenden Membranen 2 selektiv auf Wasserstoff ausgerichtet sind, erfolgt auf ihrer Oberfläche die Dissoziation nur der Wasserstoffmoleküle in Atome.

Die Atome verlieren ein Elektron und gehen in die feste Lösung des Materials der Membran 2 über (die Zusammensetzung und das Kristallgitter sind so ausgewählt, daß nur Wasserstoff durchgelassen wird) und diffundieren unter Einwirkung eines Konzentrationsgefälles von der Außenfläche der Membran 2 zur Innenfläche (von seiten des Innenraums des Elements 1), wo die Rekombination des atomaren Wasserstoffs unter Bildung von Wasserstoffmolekülen und ihre Desorption von der Innenfläche in den Innenraum des Membranelements 1 erfolgt. Weiter fließt der hochreine Wasserstoff durch den Raum des Elements 1 zum Ableitungsrohr 4 und durch die Löcher 5 in seinen Wänden in seinen Innenraum und weiter in die Kammer 23 und durch den Stutzen 12 zum Verbraucher. Der restliche Teil des wasserstoffhaltigen Gemisches wird nach der von den Membranelementen 1 ausgeführten Extraktion eines Teile des Wasserstoffs durch den Sammelkollektor 20 dem Verbraucher zugeführt.

Es wurde festgestellt, daß die Menge des aus einem Gemisch pro Flächeneinheit einer selektiven Membran 2 gewonnenen Wasserstoffs vom Verlauf der Ströme des wasserstoffhaltigen Gemisches in den Zuleitungskanälen 25,27,30 und des Wasserstoffs in den Innenräumen der Elemente 1 abhängt, die die Funktion von Ableitungskanälen ausüben.

Die größte Wasserstoffmenge wird bei geringem hydraulischen Widerstand des Ableitungskanals und bei der Strömung des Gemisches durch die Zuleitungskanäle 25,27,30 im Gegenstrom relativ zum Wasserstoff in den Ableitungskanälen (Innenräume der Elemente 1) gewonnen. Die Effektivität des Gegenstromprinzips wächst mit der Verringerung des Wasserstoffgehalts im Ausgangsgemisch und tritt stärker in Apparaten mit hohem Grad der Gewinnung des Wasserstoffs in Erscheinung.

In unserer Variante fließt das Gemisch in den Zuleitungskanälen 25,27,30 zum Kollektor 20 hin und in den erwähnten Ableitungskanälen - von ihm weg. Wenn die Membranelemente 1 in mehreren Reihen angeordnet werden (Fig. 6,7), ist die Länge der erwähnten Zuleitungskanäle 25,27,30 größer als die Länge der erwähnten Ableitungskanäle, was den Massenaustausch günstig beeinflußt und eine hohe Effektivität der Funktion des Apparats bei geringer Konzentration des Wasserstoffs im Gasgemisch gewährleistet.

Beispiel

Die Gewinnung hochreinen Wasserstoffs erfolgt in einem erfindungsgemäßen Membranapparat mit Anordnung der Membranelemente 1 in der Büchse 15 in einer Reihe entsprechend Fig. 4, und zwar werden 30 Elemente 1 verwendet. Die Fläche eines einzelnen Elements 1 beträgt 98 cm$^2$. Der Verbrauch des wasserstoffhaltigen Gasgemisches (75 % dissoziiertes Ammoniak) liegt bei 250 m$^3$/h. Die Temperatur des Prozesses beträgt 600° C, der Druck ist 1,2 MPa gleich. Der Apparat hat eine Leistung (bezogen auf Wasserstoff) von 25 m$^3$/h. Die industrielle Anlage zur Gewinnung hochreinen Wasserstoffs enthält 6 solcher Apparate, die an gemeinsame Kollektoren angeschlossen sind.

Die erfindungsgemäßen Membranelemente weisen unter Betriebsbedingungen bei 600 bis 630° C und einem Druck bis 10 MPa einen zuverlässigen hermetischen Verschluß auf und haben eine Leistung von 1 bis 1,8 m$^3$/h pro Membranelement.

Der erfindungsgemäße Membranapparat mit den Elementen besitzt eine hohe Effektivität, die durch ein rationelles Schema des Massenaustausches erzielt wird, und ermöglicht den Bau leistungsstarker Diffusionsanlagen, die einen Reinheitsgrad des Wasserstoffs von 99,9999 % gewährleisten. Die Konstruktion des Apparats gestattet einen schnellen Austausch eines ausgefallenen Elements.

Gewerbliche Anwendbarkeit

Die Erfindung kann im Hüttenwesen, z.B., bei der Herstellung von Walzerzeugnissen aus hochlegierten Stählen, die in einer Atmosphäre aus hochreinem Wasserstoff wärmebehandelt werden, und auch in der chemischen Industrie, im Maschinenbau, in der Nahrungsmittelindustrie und in der elektronischen Industrie genutzt werden.

**Patentansprüche**

1. Membranelement zur Gewinnung hochreinen Wasserstoffs, das von beiden Seiten auf eine Drenageunterlage (la) gelegte, an den Ränder (3) miteinander verbundene, wasserstoffdurchlässige Membranen (2) aus einer Legierung auf der Palladiumgrundlage und ein Ableitungsrohr (4) zur Ableitung des Wasserstoffs enthält, das mit dem Raum zwischen den Membranen (2) in Verbindung steht, dadurch gekennzeichnet, daß ein Teil des Ableitungsrohrs (4) gelocht ist, zwischen den Membranen (2) in der Nähe eines ihrer Ränder (3) im wesentlichen über die gesamte Länge der Drenageunterlage (la) verläuft und von außen von dieser Unterlage (la) unter Bildung eines verdickten Abschnitts (6) in einiger Entfernung vom Rohr (4) umfaßt wird.

2. Membranelement nach Anspruch 1, dadurch gekennzeichnet, daß das Ende (7) de Ableitungsrohrs (4) auf dem gelochten Abschnitt abgeflacht ausgeführt wird.

3. Membranelement nach Anspruch 2, dadurch gekennzeichnet, daß das abgeflachte Ende (7) des Rohrs (4) eine Schutzhülle (8) hat.

4. Membranapparat zur Gewinnung hochreinen Wasserstoffs aus wasserstoffhaltigen Gasgemischen mit Membranelementen (1) nach einem beliebigen Anspruch 1 bis 3, der ein Gehäuse (9) mit Stutzen (13,12) für die Zuleitung des wasserstoffhaltigen Gasgemisches und die Ableitung des hochreinen Wasserstoffs enthält, in dessen Innern ein Rohrgitter (14) und unter ihm die Membranelemente (1) aufgestellt sind, in denen jeweils das Ableitungsrohr (4) entlang der Längsachse des Gehäuses (9) gerichtet und im Rohrgitter (14) mit dem freien Ende (22) befestigt ist, das mit dem Stutzen (12) für die Ableitung des Wasserstoffs verbunden ist, dadurch gekennzeichnet, daß im Innern des Gehäuses (9) unter dem Rohrgitter (14) eine Büchse (15) mit gelochten Wänden (16) aufgestellt ist, die zusammen mit den Wänden (17) des Gehäuses (9) einen ringförmigen Kanal (18) für das Durchfließen des Gasgemisches bilden, und in der Büchse (15) ein durch ihren Boden (19) hindurchgehender Kollektor (20) für das Abgasgemisch und die erwähnten Membranelemente (1) untergebracht sind, von denen jedes Element (1) mit seinem vom Ableitungsrohr (4) entfernten Rand (21) ins Innere der Büchse (15) gerichtet ist.

5. Membranapparat nach Anspruch 4, dadurch gekennzeichnet, daß die Membranelemente (1) in der Büchse (15) so aufgestellt werden, daß die Ableitungsrohre (4) auf einer Kreislinie wenigstens in einer Reihe (24) angeordnet werden.

6. Membranapparat nach Anspruch 5, dadurch gekennzeichnet, daß jedes Membranelement (1) so gelegen ist, daß sein vom Ableitungsrohr (4) entfernter Rand (21) zu dem auf der Längsachse des Gehäuses (9) aufgestellten Kollektor (20) hin gerichtet ist.

7. Membranapparat nach Ansprüchen 5,6, dadurch gekennzeichnet, daß die Membranelemente (1) in zwei Reihen (24,26) angeordnet werden, wobei die Membranelemente (1) einer Reihe (24) schachbrettartig zu den Membranelementen (1) der anderen Reihe (26) angeordnet werden.

8. Membranapparat nach Anspruch 5, dadurch gekennzeichnet, daß die Membranelemente (1) in mehreren Reihen (24,28,29) angeordnet werden, wobei in der zum Kollektor nächstgelegenen Reihe (24) die vom Ableitungsrohr (4) entfernten Ränder (21) der Membranelemente (1) zu dem auf der Längsachse des Gehäuses (9) aufgestellten Kollektor (20) gerichtet sind, während die Ränder (21) der Membranelemente (1) jeder nächsten Reihe (28,29) zu den Rohren (4) der benachbarten Elemente (1) der vorhergehenden Reihe (24,28) so gerichtet sind, daß die Membranelemente (1) spiralförmige Kanäle (30) bilden.

FIG.1

FIG.2

FIG.3

FIG.4

FIG.5

FIG.6

FIG.7

# INTERNATIONAL SEARCH REPORT

International Application No  PCT/SU 88/00108

## I. CLASSIFICATION OF SUBJECT MATTER (if several classification symbols apply, indicate all) ⁵

According to International Patent Classification (IPC) or to both National Classification and IPC

IPC⁴ - B01D 53/22

## II. FIELDS SEARCHED

### Minimum Documentation Searched ⁷

| Classification System | Classification Symbols |
|---|---|
| IPC⁴ | B01D 13/00, 53/22 |

Documentation Searched other than Minimum Documentation
to the Extent that such Documents are Included in the Fields Searched ⁶

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| A | US, A, 3469372 (JAPAN GAS-CHEMICAL COMPANY, INC.) 30 September 1969 (30.09.69), see claims 5- 9 | 1-3 |
| A | US, A, 3486301 (ENGELHARD MINERALS & CHEMICALS CORPORATION), 30 December 1969 (30.12.69). see the claims | 3-8 |
| A | GB, B, 1195852 (UNION CARBIDE CORPORATION) , 24 June 1970 (24.06.70), see the claims | 1-8 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 20 December 1988 (20.12.88) | 30 January 1989 (30.01.89) |

| International Searching Authority | Signature of Authorized Officer |
|---|---|
| ISA/SU | |